# EUROPEAN PATENT SPECIFICATION

(11) **EP 4 474 047 B1**
(45) Date of publication and mention of the grant of the patent: **26.11.2025**
(21) Application number: 23766704.3
(22) Date of filing: 02.03.2023
(51) Int. Cl.: B01D 53/94, B01J 23/40, B01J 23/63, B01J 23/89, B01J 37/02, F01N 3/08, F01N 3/10, F01N 3/28

(54) **EXHAUST GAS PURIFICATION CATALYST**
ABGASREINIGUNGSKATALYSATOR
CATALYSEUR D'ÉPURATION DE GAZ D'ÉCHAPPEMENT

(30) Priority: 09.03.2022 JP 2022036273
(43) Date of publication of application: 11.12.2024
(73) Proprietor: CATALER CORPORATION, Kakegawa-shi, Shizuoka 437-1492 (JP)
(72) Inventor: ITO, Masaya, Kakegawa-shi, Shizuoka 437-1492 (JP); ONOE, Ryota, Kakegawa-shi, Shizuoka 437-1492 (JP); OHASHI, Tatsuya, Kakegawa-shi, Shizuoka 437-1492 (JP); TAKASU, Ryosuke, Kakegawa-shi, Shizuoka 437-1492 (JP); ONOHARA, Yu, Kakegawa-shi, Shizuoka 437-1492 (JP)
(74) Representative: Kramer Barske Schmidtchen Patentanwälte PartG mbB
(86) International application number: PCT/JP2023/007814
(87) International publication number: WO 2023/171528

(56) References cited:
- JP-A- 2003 245 523
- JP-A- 2016 093 760
- JP-A- 2016 163 856
- JP-A- 2017 140 589
- JP-A- 2018 143 935

## Description

### TECHNICAL FIELD

The present invention relates to an exhaust gas purification catalyst. More particularly, the present invention relates to an exhaust gas purification catalyst which includes a base material and a catalyst layer disposed on the base material and in which the catalyst layer includes a NOx storage layer. This application claims the benefit of priority to Japanese Patent Application No. 2022-036273 filed on March 9, 2022.

### BACKGROUND ART

Exhaust gas purification catalysts have been used to remove harmful components such as hydrocarbon (HC), carbon monoxide (CO), and nitrogen oxide (NOx) from exhaust gas emitted from internal combustion engines such as automobile engines. These exhaust gas purification catalysts widely employ a three-way catalyst including a catalytic metal. Due to high efficiency in removing harmful components, Rh (rhodium) as well as Pt (platinum) and/or Pd (palladium) are often used in combination as a catalytic metal. In a typical configuration of an exhaust gas purification catalyst, a catalyst layer including a three-way catalyst is disposed on a base material (see, for example, Patent Documents 1 to 5).

In regard to NOx removal, an alkali metal component and an alkali earth metal component can temporarily store NOx, and thus, are used as NOx storage material in Patent Documents 1 to 5. In particular, Patent Document 1 describes that a catalyst layer has a three-layer structure in which an intermediate layer among the three layers is configured as a NOx storage layer containing an alkali metal component or an alkali earth metal component as a NOx storage material and moreover, an upper layer is configured as a NOx reduction layer containing Rh to thereby achieve high NOx purification performance.

### CITATION LIST

### Patent Document

Patent Document 1: Japanese Patent Application Publication No. 2018-143935
Patent Document 2: Patent Document 2: International Patent Publication No. 2020/153309
Patent Document 3: Japanese Patent Application Publication No. 2015-502855
Patent Document 4: Japanese Patent Application Publication No. 2016-93760
Patent Document 5: Japanese Patent Application Publication No. 2003-24793

### SUMMARY OF INVENTION

### Technical Problems

An intensive study of inventors of the present invention, however, found that conventional techniques typified by Patent Document 1 still have room for improvement of NOx purification performance.

It is therefore an object of the present invention to provide an exhaust gas purification catalyst including a NOx storage layer and exhibiting high NOx purification performance. Solution to Problem

Through an intensive study, the inventors of the present invention found the followings. Storage of NOx by a NOx storage material including an alkali metal component or an alkali earth metal component occurs through a process in which NO is oxidized to NO₂ by a catalytic metal and this NO₂ reacts with the alkali metal component or the alkali earth metal component. Stored NOx is desorbed from these components by a temperature rise. On the other hand, to allow a catalyst to show high activity, the catalyst needs to be heated to a predetermined temperature (i.e., activation temperature) or more. Thus, in a catalyst warm-up process at start of an internal combustion engine such as an engine, a NOx storage material stores NO₂ in an exhaust gas and, after catalyst warm-up, releases NO₂, and the catalyst activated by heating purifies released NO₂, so that the NOx amount in the exhaust gas is thereby reduced.

At start of the internal combustion engine, the catalyst layer is gradually warmed by an exhaust gas from a front portion thereof, and accordingly, temperature distribution occurs in the catalyst layer. Consequently, the front portion of the catalyst layer releases stored NO₂ with a temperature rise, but in a rear portion of the catalyst layer, the catalyst is not heated to the activation temperature and cannot purify NOx completely. Consequently, in the conventional technique described above, NOx can be released as an emission.

The exhaust gas purification catalyst disclosed here is completed based on the foregoing findings. Specifically, the exhaust gas purification catalyst disclosed here is placed in an exhaust path of an internal combustion engine and used for purifying an exhaust gas from the internal combustion engine. Therefore, the exhaust gas purification catalyst is configured to be placed in an exhaust path of an internal combustion engine and configured to purify an exhaust gas from the internal combustion engine.

An exhaust gas purification catalyst disclosed here includes a base material and a catalyst layer disposed on the base material. The catalyst layer includes a lower layer located on a base material side, an upper layer located on a surface side, and an intermediate layer located between the lower layer and the upper layer. The lower layer contains a catalytic metal. The upper layer contains Rh. The intermediate layer includes a front portion and a rear portion, the front portion being located on an upstream side in an exhaust gas flow direction when the catalyst is placed in the exhaust path, the rear portion being located downstream of the front portion in the exhaust gas flow direction. Each of the front portion and the rear portion of the intermediate layer contains Pt and a NOx storage material. The NOx storage material includes at least one NOx storage element selected from the group consisting of an alkali metal element and an alkali earth metal element. A ratio (C_{A}/C_{B}) of a concentration (C_{A}) of the NOx storage element included in the front portion per 1 L of the base material to a concentration (C_{B}) of the NOx storage element included in the rear portion per 1 L of the base material satisfies 0 < C_{A}/C_{B} < 1.

With this configuration, the catalyst layer with the multilayer structure includes the NOx storage layer having the front portion located on the upstream side in the exhaust gas flow direction and the downstream rear portion, and the concentration of the NOx storage material in the rear portion is different form the concentration of the NOx storage material in the front portion, and is made higher than the concentration of the NOx storage material in the front portion. Thus, with this configuration, even in a case where the rear portion of the catalyst layer is insufficiently warmed at start of an internal combustion engine, the NOx storage material in the rear portion larger in amount than that in the front portion in the NOx storage layer can store NO₂ released from the front portion. In addition, since the NOx storage layer contains Pt, NOx storage efficiency is enhanced.

Furthermore, in the exhaust gas purification catalyst disclosed here, the layer containing Rh is located above the NOx storage layer. With this configuration, when NO₂ is released from the NOx storage material in the rear portion, NO₂ can be efficiently purified. As a result, the exhaust gas purification catalyst disclosed here can purify NOx with high efficiency while reducing release of NOx as an emission at start of an internal combustion engine, thereby exhibiting high NOx purification performance.

In a preferred aspect of the exhaust gas purification catalyst disclosed here, the ratio (C_{A}/C_{B}) satisfies 0.2 < C_{A}/C_{B} < 0.8. With this configuration, NOx purification performance is further enhanced.

In a more preferred aspect of the exhaust gas purification catalyst disclosed here, the ratio (C_{A}/C_{B}) satisfies 0.4 < C_{A}/C_{B} < 0.7. With this configuration, NOx purification performance is particularly enhanced.

In a preferred aspect of the exhaust gas purification catalyst disclosed here, the concentration (C_{A}) of the NOx storage element included in the front portion per 1 L of the base material is more than 0 g/L and 20 g/L or less, and the concentration (C_{B}) of the NOx storage element included in the rear portion is 20 g/L or more. With this configuration, NOx purification performance is further enhanced.

In a preferred aspect of the exhaust gas purification catalyst disclosed here, the catalytic metal included in the lower layer is Pd. With this configuration, particularly high purification performance for harmful components of an exhaust gas including HC and CO is obtained.

### BRIEF DESCRIPTION OF THE DRAWINGS

[FIG. 1] A perspective view schematically illustrating an exhaust gas purification catalyst according to one embodiment.
[FIG. 2] A partial cross-sectional view of the exhaust gas purification catalyst in FIG. 1 taken along a cylinder axis direction.

### DESCRIPTION OF PREFERRED EMBODIMENTS

A preferred embodiment of the present invention will be described hereinafter with reference to the drawings. Matters not specifically mentioned in the description but required for carrying out the present invention can be understood as matters of design of a person skilled in the art based on related art in the field. The present invention can be carried out on the basis of the contents disclosed in the description and common general knowledge in the field. In the drawings, members and parts having the same functions are denoted by the same reference characters, and description will not be repeated or will be simplified. Dimensional relationships (e.g., length, width, and thickness) in the drawings do not necessarily reflect actual dimensional relationships. The expression "A to B" (where A and B are any numerical values) representing a range herein includes "A or more and B or less."

An exhaust gas purification catalyst disclosed here is to be placed in an exhaust path of an internal combustion engine and used for purifying an exhaust gas from the internal combustion engine. The exhaust gas purification catalyst includes at least a base material and a catalyst layer on the base material, and the catalyst layer has a unique multilayer structure. The exhaust gas purification catalyst disclosed here can be placed in exhaust systems (exhaust pipes) of various internal combustion engines, especially automobile engines, by appropriately selecting the type and shape of the base material, design of the catalyst layer, and so forth. An exhaust gas purification catalyst disclosed here will be hereinafter described based on the premise that an internal combustion engine is an automobile gasoline engine, but it is not intended to limit the exhaust gas purification catalyst disclosed here to such application.

### <Base Material>

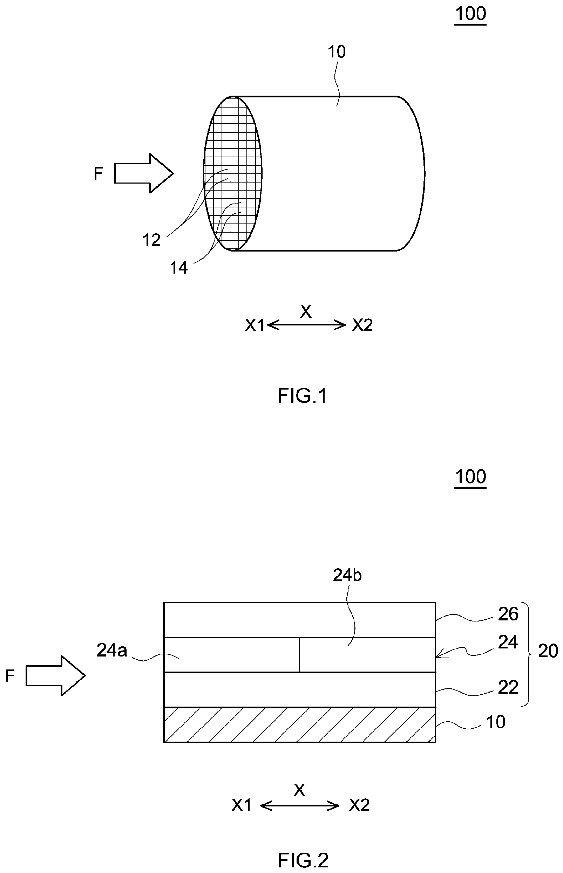

FIG. 1 is a schematic view illustrating a structure of an exhaust gas purification catalyst 100 according to one embodiment, and particularly illustrates a structure of a base material 10. In FIG. 1, arrow F indicates a flow direction of an exhaust gas when the catalyst 100 is placed in the exhaust path. Arrow X indicates a cylinder axis direction of the base material 10. X1 denotes an upstream side in the exhaust gas flow direction F, and X2 denotes a downstream side in the exhaust gas flow direction F.

As the base material 10 constituting the exhaust gas purification catalyst 100, various materials and forms conventionally used in application of this type may be employed. For example, these materials are preferably ceramic such as cordierite, aluminum titanate, and silicon carbide, because these ceramic materials have high heat resistance. Alternatively, a base material of an alloy (e.g., stainless steel) may be used.

In regard to the form, in FIG. 1, for example, the base material 10 has a honeycomb structure including a plurality of regularly arranged cells 12 and a rib wall 14 defining the plurality of cells 12. The cells 12 are through holes serving as a passage of an exhaust gas. The rib wall 14 is a partition partitioning the cells 12. The rib wall 14 is configured such that an exhaust gas passing through the cells 12 can contact the rib wall 14. The cross-sectional shape of each of the cells 12 is a quadrangle in FIG. 1, but may be other shapes (e.g., circle, triangle, hexagon, etc.).

The outer shape of the base material 10 is a cylinder in FIG. 1, but may be other shapes (e.g., oval cylinder, polygonal cylinder, etc.). The base material 10 is a honeycomb base material in FIG. 1, but may have a foam shape, a pellet shape, etc. The volume of the base material 10 is typically about 0.1 to 10 L, and is, for example, 0.5 to 5 L. The length (overall length) of the base material 10 along the cylinder axis direction X is typically about 10 to 500 mm, and is, for example, 50 to 300 mm. It should be noted that the volume of the base material 10 herein refers to a bulk volume including a volume of internal gaps such as cells in addition to a pure volume of the base material.

In FIG. 1, the base material 10 is a straight flow-type base material in which inlet openings and outlet openings of the cells 12 are not closed. Alternatively, the base material 10 may be a wall-flow type (i.e., wall-through type) base material in which inlet openings and outlet openings of a large number of cells 12 are alternately closed such that an exhaust gas flows through the rib wall from one cell (inlet cell) to an adjacent cell (outlet cell).

### <Catalyst Layer>

FIG. 2 schematically illustrates a structure of a catalyst layer 20 included in the exhaust gas purification catalyst 100. FIG. 2 is a partial cross-sectional view of the exhaust gas purification catalyst 100. In FIG. 2, arrow F, arrow X, X1, and X2 have the same meanings as those in FIG. 1.

As illustrated in FIG. 2, the catalyst layer 20 is formed on the base material 10. Typically, the catalyst layer 20 is formed on the internal surface of the base material 10. The catalyst layer 20 includes a lower layer 22 located on a side of the base material 10, an upper layer 26 located on a surface side of the catalyst layer 20, and an intermediate layer 24 located between the lower layer 22 and the upper layer 26. The intermediate layer 24 includes a front portion 24a located on an upstream side X1 in the exhaust gas flow direction F, and a rear portion 24b located on a downstream side X2 of the front portion 24a in the exhaust gas flow direction F.

It should be noted that the catalyst layer 20 may include layers other than the lower layer 22, the intermediate layer 24, and the upper layer 26 within a range that does not significantly inhibit the effects of the present invention. In the illustrated example, the lower layer 22, the intermediate layer 24, and the upper layer 26 have the same thickness, but may have different thicknesses. The thickness of the lower layer 22 is not particularly limited, and is, for example, 10 µm to 30 µm, preferably 15 µm to 25 µm. The thickness of the intermediate layer 24 is not particularly limited, and is, for example, 40 µm to 60 µm, preferably 45 µm to 55 µm. The thickness of the upper layer 26 is not particularly limited, and is, for example, 20 µm to 40 µm, preferably 25 µm to 35 µm.

The catalyst layer 20 (i.e., each of the lower layer 22, the intermediate layer 24, and the upper layer 26) contains a catalytic metal, and a substrate supporting the catalytic metal.

The type of the catalytic metal included in each of the lower layer 22, the intermediate layer 24, and the upper layer 26 will be described in detail later. The total content of the catalytic metal in the entire catalyst layer 20 is not particularly limited, and is, for example, 0.5 g/L or more, preferably 1.0 g/L or more, more preferably 2.0 g/L or more, as a content of the catalytic metal per 1 L of volume of the base material 10. On the other hand, the total content of the catalytic metal in the entire catalyst layer 20 is, for example, 8.0 g/L or less, preferably 7.0 g/L or less, more preferably 6.0 g/L or less, as a content of the catalytic metal per 1 L of volume of the base material 10.

The coating amount of the entire catalyst layer 20 may be appropriately determined depending on the type of the base material 10, and is not particularly limited. The coating amount of the entire catalyst layer 20 is, for example, 150 g/L to 450 g/L, preferably 200 g/L to 400 g/L, more preferably 250 g/L to 350 g/L, as an amount per 1 L of volume of the base material 10.

The coating length (average coating length of the base material 10 in the cylinder axis direction X) of the entire catalyst layer 20 is, for example, 60% or more of the overall length (average dimension in the cylinder axis direction X) of the base material 10, and may be 70% or more, 80% or more, 90% or more, or 100% of the overall length of the base material 10.

The coating thickness (average thickness) of the catalyst layer 20 is, for example, 3 to 300 µm, and may be 5 to 200 µm or 10 to 100 µm.

From the viewpoint of increasing the contact area with an exhaust gas, the catalytic metal included in the catalyst layer 20 is preferably fine particles with sufficiently small particle sizes. The average particle size of the catalytic metal is, for example, 1 nm to 15 nm, preferably 1 nm to 10 nm, more preferably 1 nm to 5 nm. It should be noted that the average particle size of the catalytic metal can be determined as an average value of particle sizes of 50 or more catalytic metal particles randomly selected in an image obtained as a transmission electron microscope (TEM) image of the catalytic metal.

As a substrate supporting the catalytic metal, a known material used as a substrate of a catalytic metal of an exhaust gas purification catalyst can be used. The substrate is typically an inorganic porous body. Examples of the substrate include: materials having no oxygen storage capacity (non-OSC materials) such as aluminium oxide (Al₂O₃, alumina), titanium oxide (TiO₂, titania), zirconium oxide (ZrO₂, zirconia), and silicon oxide (SiO₂, silica); and materials having oxygen storage capacity (OSC materials) such as ceria (CeO₂) and composite oxides including ceria. The substrate may be either a non-OSC material or an OSC material and may be both.

To increase heat resistance and other properties, a small amount (e.g., 1 mass% or more and 10 mass% or less) of an oxide of a rare-earth element such as Pr₂O₃, Nd₂O₃, La₂O₃, or Y₂O₃ may be added to an oxide used as a non-OSC material. From the viewpoint of especially high heat resistance and durability, the non-OSC material is preferably Al₂O₃, more preferably Al₂O₃ compounded with La₂O₃ (La₂O₃-Al₂O₃ composite oxide: LA composite oxide).

The content of the non-OSC material in the catalyst layer 20 is not particularly limited, and is preferably 100 g/L or more and 370 g/L or less, more preferably 170 g/L or more and 300 g/L or less, as an amount per 1 L of volume of the base material 10.

Concerning the OSC material, examples of the composite oxide containing ceria include a composite oxide containing ceria and zirconia (e.g., ceria-zirconia composite oxide, so-called CZ composite oxide or ZC composite oxide). When the OSC material contains zirconium oxide, thermal degradation of cerium oxide can be suppressed and therefore, the OSC material is preferably ceria-zirconia composite oxide.

The OSC material may contain an oxide of a rare-earth element, an alkali metal element, an alkali earth metal element, a transition metal element, Si, Al, and the like in order to enhance properties (especially heat resistance, oxygen absorbing/releasing capacity, etc.). Examples of the rare-earth element include Sc, Y, La, Pr, Nd, Pm, Sm, Eu, Gd, Tb, Dy, Ho, Er, Tm, Yb, and Lu. Preferred examples of an oxide of the rare-earth element include Pr₂O₃, Nd₂O₃, La₂O₃, and Y₂O₃.

In a case where the OSC material is a composite oxide including cerium oxide, from the viewpoint of sufficiently exhibiting oxygen storage capacity thereof, the content of cerium oxide is preferably 10 mass% or more, more preferably 25 mass% or more. On the other hand, when the content of cerium oxide is excessively high, basicity of the OSC material might be excessively high. For this reason, the content of cerium oxide is preferably 90 mass% or less, more preferably 75 mass% or less.

The content of the OSC material in the catalyst layer 20 is not particularly limited, and is preferably 45 g/L or more and 250 g/L or less, more preferably 80 g/L or more and 200 g/L or less, as an amount per 1 L of volume of the base material 10.

The catalyst layer 20 may further contain the OSC material and/or the non-OSC material in the form of not supporting the catalytic metal. For example, the catalyst layer 20 may include the non-OSC material supporting the catalytic metal and the OSC material supporting no catalytic metal.

The catalyst layer 20 may include a binder, an additive, and so forth. Examples of the binder include alumina sol and silica sol.

The lower layer 22, the intermediate layer 24, and the upper layer 26 included in the catalyst layer 20 will be described in detail below.

### <Lower Layer>

The lower layer 22 contains a catalytic metal. As the catalytic metal, various metal species that can function as oxidation catalysts and/or reduction catalysts in purification of harmful components of an exhaust gas can be used. Typical examples of the catalytic metal include a platinum group, that is, rhodium (Rh), palladium (Pd), platinum (Pt), ruthenium (Ru), osmium (Os), and iridium (Ir). Instead of, or in addition to, the platinum group, other metal species may be used. For example, metal species such as iron (Fe), cobalt (Co), nickel (Ni), copper (Cu), silver (Ag), and gold (Au) may be used. Alternatively, an alloy of two or more of these metals may be used. Since Rh, which has high reduction activity (NOx purification capacity), is used for the upper layer 26 as described later, the catalytic metal included in the lower layer 22 preferably has high oxidation activity (HC and CO purification capacity). Specifically, the catalytic metal included in the lower layer 22 is preferably at least one of Pd and Pt, more preferably Pd. Pd has a merit that Pd does not easily degrade its activity even in an oxidation state, as compared to other catalytic metals. By allowing the lower layer 22 to contain Pd, HC and CO can be especially efficiently removed, and the exhaust gas purification catalyst 100 has especially high purification performance on harmful components of an exhaust gas including HC and CO.

The content of the catalytic metal in the lower layer 22 is not particularly limited. When the content of the catalytic metal is excessively small, catalyst activity obtained by the catalytic metal might be insufficient. On the other hand, when the content of the catalytic metal is excessively large, the catalytic metal tends to cause grain growth and, at the same time, it is disadvantageous in terms of cost. In view of this, the content of the catalytic metal in the lower layer 22 is preferably 0.1 g/L to 5 g/L, more preferably 0.5 g/L to 3 g/L, as the amount of the catalytic metal (especially Pd) per 1 L of volume of the base material 10.

The lower layer 22 preferably includes an OSC material. The OSC material may be a substrate or a non-substrate. The lower layer 22 more preferably includes an OSC material and a non-OSC material. The content of the OSC material in the lower layer 22 is preferably 20 g/L to 100 g/L, more preferably 30 g/L to 80 g/L, as an amount per 1 L of volume of the base material 10. The content of the non-OSC material in the lower layer 22 is preferably 30 g/L to 130 g/L, more preferably 50 g/L to 100 g/L, as an amount per 1 L of volume of the base material 10.

The lower layer 22 may contain a subsidiary material including an alkali metal element, an alkali earth metal element, a rare earth metal element, a transition metal element, and the like. The subsidiary material may be an oxide, a hydroxide, a carbonate, a nitrate, a sulfate, a phosphate, an acetate, a formate, an oxalate, a halide or the like of these elements. For example, in a case where the lower layer 22 contains the alkaline earth element (e.g., calcium (Ca), barium (Ba), etc.), the alkaline earth element can suppress poisoning of the catalytic metal (especially oxidation catalyst). In addition, the alkaline earth element enhances dispersibility of the catalytic metal to thereby reduce sintering caused with grain growth of the catalytic metal. In a case where the lower layer 22 includes an alkaline earth element together with the OSC material, the amount of oxygen absorption into the OSC material can be further increased under a lean atmosphere (oxygen-rich atmosphere), where the fuel is leaner than the stoichiometric air-fuel ratio.

In this embodiment, since the intermediate layer 24 serves as a NOx storage layer, the lower layer 22 does not need to substantially include the NOx storage material. The expression "a layer substantially does not include a component" herein means that the content of this component in the total mass of the layer is 1 mass% or less (preferably 0.5 mass% or less, more preferably 0.1 mass% or less, even more preferably 0 mass%). Preferably, the lower layer 22 substantially does not include a NOx storage material, a subsidiary material including an alkali metal element, and a subsidiary material including an alkali earth metal element.

### <Intermediate Layer>

In the catalyst layer 20, the intermediate layer 24 serves as a catalyst layer and a NOx storage layer.

Each of the front portion 24a and the rear portion 24b of the intermediate layer 24 contains Pt as a catalytic metal. Pt has highest NO oxidation performance in the catalytic metals, and thus, by allowing the intermediate layer 24 to contain Pt, NO can be converted to NO₂, which is a form of being absorbed by the NOx storage material, near the NOx storage material. In addition, since Pt has high reactivity to paraffin-based HC, by allowing the intermediate layer 24 to contain Pt, HC can be efficiently purified. The content of Pt in the intermediate layer 24 is not particularly limited. When the content of Pt is excessively small, catalyst activity obtained by Pt might be insufficient. On the other hand, when the content of Pt is excessively large, Pt tends to cause grain growth and, at the same time, it is disadvantageous in terms of cost. In view of this, the content of Pt per 1 L of volume of the base material 10 is preferably 0.1 g/L to 5 g/L, more preferably 0.5 g/L to 3 g/L.

A concentration (P_{A}) of Pt in the front portion 24a of the intermediate layer 24 is preferably approximately equal to a concentration (P_{B}) of Pt in the rear portion 24b of the intermediate layer 24. Specifically, a ratio (P_{A}/P_{B}) preferably satisfies 0.5 ≤ P_{A}/P_{B} ≤ 1.5, more preferably satisfies 0.8 ≤ P_{A}/P_{B} ≤ 1.2, even more preferably satisfies P_{A}/P_{B} = 1.0.

Each of the front portion 24a and the rear portion 24b of the intermediate layer 24 contains a NOx storage material including at least one NOx storage element selected from the group consisting of an alkali metal and an alkali earth metal. The NOx storage material is not particularly limited to a specific type as long as the NOx storage material includes the elements described above, and the NOx storage material is typically a component including the at least one NOx storage element and being in the form of a carbonate or an oxide, or a combination thereof. Examples of the alkali metal include Li, K, and Cs, and among these elements, K is preferable. Examples of the alkali earth metal include Mg, Sr, Ba, and among these elements, Ba is preferable. The NOx storage material is particularly preferably a compound selected from the group consisting of an oxide including Ba and a carbonate including Ba.

In the intermediate layer 24 of this embodiment, a concentration (C_{B}) of the NOx storage element included in the rear portion 24b per 1 L of the base material (hereinafter referred to as a "NOx storage element concentration (C_{B}) of the rear portion 24b") is higher than a concentration (C_{A}) of the NOx storage element included in the front portion 24a per 1 L of the base material (hereinafter referred to as a "NOx storage element concentration (C_{A}) of the front portion 24a"). Thus, a ratio (C_{A}/C_{B}) of the NOx storage element concentration (C_{A}) of the front portion 24a to the NOx storage element concentration (C_{B}) of the rear portion 24b satisfies 0 < C_{A}/C_{B} < 1.

At start of the internal combustion engine, the catalyst layer 20 is gradually warmed by the exhaust gas from a front portion thereof, and thus, a temperature distribution occurs in the catalyst layer 20. The front portion 24a of the intermediate layer 24 of the catalyst layer 20 releases stored NO₂ with a temperature rise, but in the rear portion of the catalyst layer 20, the catalyst is not sufficiently heated to the activation temperature, and cannot purify NOx completely.

In view of this, in this embodiment, the rear portion 24b of the intermediate layer 24 of the catalyst layer 20 includes a larger amount of the NOx storage material than the front portion 24a. Accordingly, even in a case where the rear portion of the catalyst layer 20 is insufficiently warmed at start of the internal combustion engine, the NOx storage material of the rear portion 24b in an amount larger than in the front portion 24a can store NO₂ released from the front portion 24a. In this manner, it is possible to suppress release of NOx as an emission at start of the internal combustion engine. In addition, after warm-up of the catalyst layer 20, even if the front portion 24a cannot completely store NO₂ under high SV conditions or in a case where control cannot follow AFR variations after fuel cut (FC), the NOx storage material in the rear portion 24b in an amount larger than in the front portion 24a can absorb NO₂ released from the front portion 24a.

From the viewpoint of higher NOx purification performance, the ratio (C_{A}/C_{B}) preferably satisfies 0.1 < C_{A}/C_{B} < 0.85, more preferably satisfies 0.2 < C_{A}/C_{B} < 0.8, even more preferably satisfies 0.4 < C_{A}/C_{B} < 0.7.

From the viewpoint of higher NOx purification performance, the NOx storage element concentration (C_{A}) of the front portion 24a is preferably more than 0 g/L and 20 g/L or less, and the concentration (C_{B}) of the NOx storage material in the rear portion 24b is preferably 20 g/L or more. The NOx storage element concentration (C_{A}) of the front portion 24a is preferably 3 g/L or more, more preferably 5 g/L or more. The NOx storage element concentration (C_{B}) of the rear portion 24b is more preferably 30 g/L or more, even more preferably 37.5 g/L or more. It should be noted that for reasons such as manufacturing limitations, the NOx storage element concentration (C_{B}) of the rear portion 24b can be 40 g/L or less.

The intermediate layer 24 preferably includes an OSC material. The OSC material may be a substrate or a non-substrate. The intermediate layer 24 more preferably includes an OSC material and a non-OSC material. The content of the OSC material in the intermediate layer 24 is preferably 20 g/L to 100 g/L, more preferably 40 g/L to 80 g/L, as an amount per 1 L of volume of the base material 10. The content of the non-OSC material in the intermediate layer 24 is preferably 40 g/L to 120 g/L, more preferably 60 g/L to 100 g/L, as an amount per 1 L of volume of the base material 10.

It should be noted that in FIG. 2, in the intermediate layer 24, the front portion 24a and the rear portion 24b are in contact with each other. Alternatively, in the intermediate layer 24, the front portion 24a and the rear portion 24b may be separated from each other. For reasons of manufacturing processes using slurry, for example, an end portion of the front portion 24a and an end portion of the rear portion 24b may partially overlap each other.

For reasons of manufacturing processes using slurry described above, for example, an end portion of the front portion 24a and an end portion of the rear portion 24b can partially overlap each other. Thus, to avoid this overlapping, an analysis of the NOx storage element concentration (C_{A}) of the front portion 24a and the NOx storage element concentration (C_{B}) of the rear portion 24b may be performed at a position corresponding to 30% of the length of the base material 10 from an end portion of the base material 10.

The coating length of the front portion 24a is preferably 30% to 70%, more preferably 40% to 60%, even more preferably 45% to 55%, of the overall length (i.e., average dimension in the cylinder axis direction) of the base material 10. Similarly, the coating length of the rear portion 24b is preferably 30% to 70%, more preferably 40% to 60%, even more preferably 45% to 55%, of the overall length of the base material 10.

### <Upper Layer>

The upper layer 26 contains Rh as a catalytic metal. Rh has higher H₂ generation capacity and higher three-way performance than other catalytic metals. In particular, Rh has high NOx purification capacity. Thus, since the upper layer 26 located closer to the surface portion than the intermediate layer 24 contains Rh as a catalytic metal, when NOx stored in the intermediate layer 24 is released, NOx can be efficiently removed.

The content of Rh in the upper layer 26 is not particularly limited. When the content of Rh is excessively small, catalyst activity obtained by Rh might be insufficient. On the other hand, when the content of Rh is excessively large, Rh tends to cause grain growth and, at the same time, it is disadvantageous in terms of cost. In view of this, the content of Rh per 1 L of volume of the base material 10 is preferably 0.01 g/L to 1.0 g/L, more preferably 0.05 g/L to 0.5 g/L.

The upper layer 26 preferably includes an OSC material. The OSC material may be a substrate or a non-substrate. The upper layer 26 more preferably includes an OSC material and a non-OSC material. The content of the OSC material in the upper layer 26 is preferably 5 g/L to 50 g/L, more preferably 10 g/L to 40 g/L, as an amount per 1 L of volume of the base material 10. The content of the non-OSC material in the upper layer 26 is preferably 40 g/L to 120 g/L, more preferably 60 g/L to 100 g/L, as an amount per 1 L of volume of the base material 10.

The upper layer 26 may contain a subsidiary material including a rare earth metal element, a transition metal element, or the like.

In this embodiment, since the intermediate layer 24 serves as a NOx storage layer, the upper layer 26 does not need to substantially include the NOx storage material. In one preferred embodiment, the upper layer 26 substantially does not include a NOx storage material, a subsidiary material including an alkali metal element, and a subsidiary material including an alkali earth metal element.

As described above, the exhaust gas purification catalyst 100 including the catalyst layer 20 having a unique multilayer structure can purify NOx with high efficiency while suppressing release of NOx as an emission at start of an internal combustion engine, and thus, has high NOx purification performance.

### <<Method for Producing Exhaust Gas Purification Catalyst 100>>

The exhaust gas purification catalyst 100 can be produced by, for example, the following method. First, a base material 10 and a catalyst layer slurry for forming a catalyst layer 20 are prepared. The catalyst layer slurry can be prepared by mixing, for example, a catalytic metal source (e.g., solution containing a catalytic metal as ions) and other components (e.g., NOx storage material, non-OSC material, OSC material, binder, various additives, etc.) in a dispersion medium. Examples of the dispersion medium include water and a mixture of water and a water-soluble organic solvent. Properties (e.g., viscosity, solid content, etc.) of slurry can be appropriately determined depending on the size of the base material 10 to be used, the form of the cells 12 (rib wall 14), properties required for the catalyst layer 20, and so forth. It is advantageous for adjusting viscosity of slurry to use cellulose-based polymer such as carboxymethyl cellulose (CMC), methyl cellulose (MC), hydroxypropyl methyl cellulose (HPMC), or hydroxyethylmethyl cellulose (HEMC).

Specifically, for example, lower layer slurry containing a catalytic metal source, intermediate layer slurry containing a Pt source and a NOx storage material, and upper layer slurry containing a Rh source are prepared. In this preparation, as the intermediate layer slurry, intermediate layer front portion slurry in which the concentrations of the alkali metal element and the alkali earth metal element included in the NOx storage material are low relative to the total solid contents, and intermediate layer rear portion slurry in which the concentrations of the alkali metal element and the alkali earth metal element included in the NOx storage material are high relative to the total solid contents are prepared.

The lower layer slurry is applied onto the base material by a known application method (e.g., impregnation, wash coating, etc.), dried, and then fired, thereby forming a lower layer. Subsequently, the intermediate layer front portion slurry is applied onto an area of the base material from a front-side end to a predetermined position by a known method, and dried. On the other hand, the intermediate layer rear portion slurry is applied onto an area of the base material from a rear-side end to a predetermined position by a known method, and dried. Then, the resultant is fired, thereby forming an intermediate layer. Further, upper layer slurry is applied onto the intermediate layer by a known coating method, dried, and then fired, thereby forming an upper layer. Drying conditions vary depending on the shape and size of the base material or the substrate, and are typically about 70 to 150°C (e.g., 90 to 130°C) for about 1 to 10 hours. Firing conditions are typically about 300 to 800°C (e.g., 400 to 500°C) for about 1 to 4 hours. In the foregoing manner, the exhaust gas purification catalyst 100 can be obtained.

### <<Application of Exhaust Gas Purification Catalyst 100>>

The exhaust gas purification catalyst 100 is preferably applicable to purification of an exhaust gas emitted from internal combustion engines of marine products such as ships, tankers, water bikes, personal watercrafts and outboard motors, gardening products such as grass mowers, chain saws, and trimmers, leisure products such as golf carts and four-wheeled buggies, power generation facilities such as cogeneration systems, refuse incinerators, and the like as well as vehicles such as automobiles and trucks, autobicycles, and motorcycles. Among these, the catalyst 100 is suitably applicable to vehicles such as automobiles, and particularly suitably applicable to vehicles including gasoline engines.

Test examples of the present invention will be described below, but are not intended to limit the present invention.

### <Test Base Material>

Cylindrical cordierite honeycomb base materials each having a diameter of 118.4 mm, an overall length of 114.3 mm, and a base material capacity of 1.26 L as illustrated in FIG. 1 were prepared as base materials of examples and comparative examples. One end of each base material is defined as a front-side end (i.e., exhaust gas inflow end), and the other end is defined as a rear-side end (i.e., exhaust gas outflow end).

### <Production of Exhaust Gas Purification Catalyst of Examples 1 through 4 and Comparative Examples 1 through 5>

A palladium nitrate aqueous solution, ZC composite oxide powder, Al₂O₃ powder, and ion-exchanged water were mixed, thereby preparing lower layer Pd-containing slurry. This lower layer Pd-containing slurry was applied by wash coating onto each of the base materials described above over 100% of the length (dimension in the cylinder axis direction) of the base material. Thie slurry was dried at 90°C for one hour, and then fired at 500°C for one hour, thereby forming a lower layer. The Pd amount per a unit volume of the base material was 74 g/cft (about 2.61 g/L).

A platinum nitrate aqueous solution, ZC composite oxide powder, Al₂O₃ powder, barium carbonate, and ion-exchanged water were mixed, thereby preparing intermediate layer Pt-containing slurry. Multiple types of the intermediate layer Pt-containing slurry with different Ba amounts were prepared. Intermediate layer Pt-containing slurry containing no barium carbonate was also prepared. Then, first intermediate layer Pt-containing slurry was applied by wash coating onto an area of each of the base material from the front-side end to 50% of the length of the base material, dried at 90°C for one hour, and then fired at 500°C for one hour, thereby forming a front portion. Second intermediate layer Pt-containing slurry was applied by wash coating onto an area of each base material from the rear-side end to 50% of the length of the base material, dried at 90°C for one hour, and then fired at 500°C for one hour, thereby forming a rear portion. In this manner, an intermediate layer including the front portion and the rear portion was formed. It should be noted that each of the first intermediate layer Pt-containing slurry and the second intermediate layer Pt-containing slurry were selected such that the Ba concentration (C_{A}) of the front portion and the Ba concentration (C_{B}) of the rear portion per 1 L of the base material had values shown in Table 1. The P amounts per a unit volume of the base material were the same in the front portion and the rear portion, and were 30 g/cft (about 1.06 g/L).

A rhodium nitrate aqueous solution, ZC composite oxide powder, Al₂O₃ powder, and ion-exchanged water were mixed, thereby preparing upper layer Rh-containing slurry. This upper layer Rh-containing slurry was applied by wash coating onto the intermediate layer formed as described above over 100% of the length of the base material. Thie slurry was dried at 90°C for one hour, and then fired at 500°C for one hour, thereby forming an upper layer. The Rh amount per a unit volume of the base material was 6 g/cft (about 0.21 g/L). In this manner, exhaust gas purification catalysts of Examples 1 through 4 and Comparative Examples 1 through 5 were obtained. Analysis on the Ba concentration (C_{A}) of the front portion and the Ba concentration (C_{B}) of the rear portion was conducted at the positions of 30% of the length of the base material from the front-side end and the rear-side end, respectively, of the base material to determine that the Ba concentration (C_{A}) of the front portion and the Ba concentration (C_{B}) of the rear portion had values shown in Table 1.

### <Production of Exhaust Gas Purification Catalyst of Comparative Example 6>

The lower layer Pd-containing slurry described above was applied by wash coating onto the base material described above over 100% of the length of the base material. This slurry was dried at 90°C for one hour, and then fired at 500°C for one hour, thereby forming a lower layer. The Pd amount per a unit volume of the base material was 74 g/cft (about 2.61 g/L).

A platinum nitrate aqueous solution, a rhodium nitrate aqueous solution, ZC composite oxide powder, Al₂O₃ powder, barium carbonate, and ion-exchanged water were mixed, thereby preparing upper layer Pt, Rh-containing slurry. Two types of the upper layer Pt, Rh-containing slurry with different Ba amounts were prepared. Then, first upper layer Pt, Rh-containing slurry was applied by wash coating onto an area of the base material from the front-side end to 50% of the length of the base material, dried at 90°C for one hour, and then fired at 500°C for one hour, thereby forming a front portion. Second upper layer Pt, Rh-containing slurry was applied by wash coating onto an area of the base material from the rear-side end to 50% of the length of the base material, dried at 90°C for one hour, and then fired at 500°C for one hour, thereby forming a rear portion. In this manner, an upper layer including the front portion and the rear portion was formed. At this time, the upper layer was formed such that the Ba concentration (C_{A}) of the front portion and the Ba concentration (C_{B}) of the rear portion per 1 L of the base material had values shown in Table 1. The Pt amount per a unit volume of the base material was 30 g/cft (about 1.06 g/L) in both the front portion and the rear portion, and the Pd amount per a unit volume of the base material was 37 g/cft (about 1.31 g/L) in both the front portion and the rear portion. In this manner, the exhaust gas purification catalyst of Comparative Example 6 was obtained.

### <NOx Storage Amount Evaluation>

The exhaust gas purification catalysts of the examples and the comparative examples were cooled to 100°C or below, and then placed in an exhaust pipe of an engine bench. An exhaust gas with a λ value of 1.08 subjected to temperature adjustment to 300°C by a heat exchanger was caused to flow into the exhaust gas purification catalysts. At this time, an NOx concentration at a position before a catalyst inflow and a NOx concentration at a position after a catalyst outflow were measured, and based on the measured values, a NOx storage amount (mg/L) per 1 L of the base material was calculated. Table 1 shows the results.

### <NOx Purification rate Evaluation>

The exhaust gas purification catalysts of the examples and the comparative examples were cooled to 100°C or below, and then placed in an exhaust pipe of an engine bench. An exhaust gas with a λ value of 1.08 subjected to temperature adjustment to 300°C by a heat exchanger was caused to flow into the exhaust gas purification catalysts. At this time, a NOx integrated quantity at a position before a catalyst inflow for 180 seconds and a NOx integrated quantity at a position after a catalyst outflow for 180 were measured, and based on the measured values, a NOx purification rate (%) was calculated. Table 1 shows the results.

**[Table 1]**

| | C_{A} (g/L) | C_{B} (g/L) | C_{A}/C_{B} | Rh location | NOx storage amount (mg/L) | NOx purification rate (%) |
|---|---|---|---|---|---|---|
| Comparative Example 1 | 0 | 22.5 | 0 | upper layer | 546 | 63 |
| Example 1 | 10 | 22.5 | 0.44 | upper layer | 666 | 94 |
| Example 2 | 20 | 22.5 | 0.89 | upper layer | 604 | 87 |
| Comparative Example 2 | 22.5 | 22.5 | 1 | upper layer | 591 | 86 |
| Comparative Example 3 | 30 | 22.5 | 1.33 | upper layer | 583 | 75 |
| Comparative Example 4 | 20 | 15 | 1.33 | upper layer | 562 | 80 |
| Comparative Example 5 | 20 | 20 | 1 | upper layer | 589 | 84 |
| Example 3 | 20 | 30 | 0.67 | upper layer | 620 | 89 |
| Example 4 | 20 | 37.5 | 0.53 | upper layer | 623 | 92 |
| Comparative Example 6 | 20 | 22.5 | 0.89 | NOx storage layer (no upper layer) | 577 | 72 |

The results of Table 1 show that the configuration in which the NOx storage layer contains Pt, the rear portion of the NOx storage layer has an increased Ba concentration, and the layer containing Rh is located above the NOx storage layer can increase the NOx storage amount and can achieve highly efficient purification of NOx. From the foregoing results, it can be understood that the exhaust gas purification catalyst disclosed here is an exhaust gas purification catalyst including a NOx storage layer and having high NOx purification performance.

Specific examples of the present invention have been described in detail hereinbefore, but are merely illustrative examples, and are not intended to limit the scope of claims. The techniques described in claims include various modifications and changes of the above exemplified specific examples.

## Claims

1. An exhaust gas purification catalyst (100) to be placed in an exhaust path of an internal combustion engine and used for purifying an exhaust gas from the internal combustion engine, the exhaust gas purification catalyst (100) comprising:
a base material (10); and
a catalyst layer (20) disposed on the base material (10), wherein
the catalyst layer (20) includes a lower layer (22) located on a base material side, an upper layer (26) located on a surface side, and an intermediate layer (24) located between the lower layer (22) and the upper layer (26),
the lower layer (22) contains a catalytic metal,
the upper layer (26) contains Rh,
the intermediate layer (24) includes a front portion (24a) and a rear portion (24b), the front portion (24a) being located on an upstream side in an exhaust gas flow direction when the catalyst (100) is placed in the exhaust path, the rear portion (24b) being located downstream of the front portion (24a) in the exhaust gas flow direction,
each of the front portion (24a) and the rear portion (24b) of the intermediate layer (24) contains Pt and a NOx storage material,
the NOx storage material includes at least one NOx storage element selected from the group consisting of an alkali metal element and an alkali earth metal element, and
a ratio (C_{A}/C_{B}) of a concentration (C_{A}) of the NOx storage element included in the front portion (24a) per 1 L of the base material (10) to a concentration (C_{B}) of the NOx storage element included in the rear portion (24b) per 1 L of the base material (10) satisfies 0 < C_{A}/C_{B} < 1.

2. The exhaust gas purification catalyst (100) according to claim 1, wherein the ratio (C_{A}/C_{B}) satisfies 0.2 < C_{A}/C_{B} < 0.8.

3. The exhaust gas purification catalyst (100) according to claim 2, wherein the ratio (C_{A}/C_{B}) satisfies 0.4 < C_{A}/C_{B} < 0.7.

4. The exhaust gas purification catalyst (100) according to any one of claims 1 to 3, wherein the concentration (C_{A}) of the NOx storage element included in the front portion (24a) per 1 L of the base material (10) is more than 0 g/L and 20 g/L or less, and the concentration (C_{B}) of the NOx storage element included in the rear portion (24b) is 20 g/L or more.

5. The exhaust gas purification catalyst (100) according to any one of claims 1 to 4, wherein the catalytic metal included in the lower layer (22) is Pd.

## Patentansprüche

1. Abgasreinigungskatalysator (100) zum Platzieren in einem Abgaspfad einer Brennkraftmaschine und zum Verwenden zum Reinigen eines Abgases der Brennkraftmaschine, welcher Abgasreinigungskatalysator (100)
ein Basismaterial (10), und
eine Katalysatorschicht (20), die auf dem Basismaterial (10) vorgesehen ist, aufweist, bei dem
die Katalysatorschicht (20) eine untere Schicht (22), die sich auf einer Basismaterialseite befindet, eine obere Schicht (26), die sich auf einer Oberflächenseite befindet, und eine Zwischenschicht (24), die sich zwischen der unteren Schicht (22) und der oberen Schicht (26) befindet, aufweist,
die untere Schicht (22) ein katalytisches Metall aufweist,
die obere Schicht (26) Rh aufweist,
die Zwischenschicht (24) einen vorderen Abschnitt (24a) und einen hinteren Abschnitt (24b) aufweist, welcher vordere Abschnitt (24a) sich auf einer stromaufwärtigen Seite in einer Abgasströmungsrichtung befindet, wenn der Katalysator (100) in dem Abgaspfad platziert ist, welcher hintere Abschnitt (24b) sich in der Abgasströmungsrichtung stromabwärts des vorderen Abschnitts (24a) befindet,
jeder, der vordere Abschnitt (24a) und der hintere Abschnitt (24b) der Zwischenschicht (24), Pt und ein NOx-Speichermaterial aufweist,
das NOx-Speichermaterial mindestens ein NOx-Speicherelement aufweist, das aus der Gruppe, die aus einem Alkalimetallelement und einem Erdalkalimetallelement besteht, ausgewählt ist,
ein Verhältnis (C_{A}/C_{B}) einer Konzentration (C_{A}) des NOx-Speicherelements, das der vordere Abschnitt (24a) pro 1 L des Basismaterials (10) aufweist, zu einer Konzentration (C_{B}) des NOx-Speicherelements, das der hintere Abschnitt (24b) pro 1 L des Basismaterials (10) aufweist, 0 < C_{A}/C_{B} < 1 erfüllt.

2. Abgasreinigungskatalysator (100) nach Anspruch 1, bei dem das Verhältnis (C_{A}/C_{B}) 0,2 < C_{A}/C_{B} < 0,8 erfüllt.

3. Abgasreinigungskatalysator (100) nach Anspruch 2, bei dem das Verhältnis (C_{A}/C_{B}) 0,2 < C_{A}/C_{B} < 0,7 erfüllt.

4. Abgasreinigungskatalysator (100) nach einem der Ansprüche 1 bis 3, bei dem die Konzentration (C_{A}) des NOx-Speicherelements, das der vordere Abschnitt (24a) pro 1 L des Basismaterials (10) aufweist, mehr als 0 g/L und 20 g/L oder weniger beträgt und die Konzentration (C_{B}) des NOx-Speicherelements, das der hintere Abschnitt (24b) aufweist, 20 g/L oder mehr beträgt.

5. Abgasreinigungskatalysator (100) nach einem der Ansprüche 1 bis 4, bei dem das katalytische Metall, das die untere Schicht (22) aufweist, Pd ist.

## Revendications

1. Catalyseur d'épuration de gaz d'échappement (100) à placer dans une voie d'échappement d'un moteur à combustion interne et utilisé pour purifier un gaz d'échappement du moteur à combustion interne, le catalyseur d'épuration de gaz d'échappement (100) comprenant :
un matériau de base (10) ; et
une couche de catalyseur (20) disposée sur le matériau de base (10), dans lequel
la couche de catalyseur (20) comprend une couche inférieure (22) située du côté du matériau de base, une couche supérieure (26) située du côté de la surface et une couche intermédiaire (24) située entre la couche inférieure (22) et la couche supérieure (26),
la couche inférieure (22) contient un métal catalytique,
la couche supérieure (26) contient du Rh,
la couche intermédiaire (24) comprend une partie avant (24a) et une partie arrière (24b), la partie avant (24a) étant située sur un côté amont dans une direction d'écoulement des gaz d'échappement lorsque le catalyseur (100) est placé dans la voie d'échappement, la partie arrière (24b) étant située en aval de la partie avant (24a) dans la direction d'écoulement des gaz d'échappement,
chacun de la partie avant (24a) et la partie arrière (24b) de la couche intermédiaire (24) contient du Pt et un matériau de stockage de NOx,
le matériau de stockage de NOx comprend au moins un élément de stockage de NOx choisi dans le groupe constitué d'un élément métallique alcalin et d'un élément métallique alcalino-terreux, et
un rapport (C_{A}/C_{B}) d'une concentration (C_{A}) de l'élément de stockage de NOx inclus dans la partie avant (24a) pour 1 L du matériau de base (10) à une concentration (C_{B}) de l'élément de stockage de NOx inclus dans la partie arrière (24b) pour 1 L du matériau de base (10) satisfait à 0 < C_{A}/C_{B} < 1.

2. Catalyseur d'épuration de gaz d'échappement (100) selon la revendication 1, dans lequel le rapport (C_{A}/C_{B}) satisfait à 0,2 < C_{A}/C_{B} < 0,8.

3. Catalyseur d'épuration de gaz d'échappement (100) selon la revendication 2, dans lequel le rapport (C_{A}/C_{B}) satisfait à 0,4 < C_{A}/C_{B} < 0,7.

4. Catalyseur d'épuration de gaz d'échappement (100) selon l'une quelconque des revendications 1 à 3, dans lequel la concentration (C_{A}) de l'élément de stockage de NOx inclus dans la partie avant (24a) par 1 L du matériau de base (10) est supérieure à 0 g/L et inférieure ou égale à 20 g/L, et la concentration (C_{B}) de l'élément de stockage de NOx inclus dans la partie arrière (24b) est supérieure ou égale à 20 g/L.

5. Catalyseur d'épuration de gaz d'échappement (100) selon l'une quelconque des revendications 1 à 4, dans lequel le métal catalytique inclus dans la couche inférieure (22) est du Pd.
